# EUROPEAN PATENT APPLICATION

(11) **EP 3 660 354 A1**
(43) Date of publication of application: **03.06.2020**
(21) Application number: 19209086.8
(22) Date of filing: 14.11.2019
(51) Int. Cl.: F16H 57/04, F16H 3/091

(54) **LUBRICATING STRUCTURE FOR TRANSMISSION, TRANSMISSION AND VEHICLE**

(30) Priority: 27.11.2018 JP 2018221178
(71) Applicant: Mazda Motor Corporation, Hiroshima 730-8670 (JP)
(72) Inventor: TAGAWA, Takeru, Aki-gun, Hiroshima 730-8670 (JP); KITAHARA, Tomoyuki, Aki-gun, Hiroshima 730-8670 (JP); SATO, Koichi, Aki-gun, Hiroshima 730-8670 (JP)
(74) Representative: Müller-Boré & Partner Patentanwälte PartG mbB

(57) **Abstract**

There is provided a lubricating structure for a transmission, which is a longitudinally mounted manual transmission, the lubricating structure being simple and ensuring an amount of oil to be fed to a portion to be lubricated in a transmission case and also allowing a reduction in amount of oil retained. The lubricating structure for a transmission includes: a plurality of transmission gear trains G1 to G5 provided at axial intervals between an input shaft 10 and a counter shaft 30 disposed below and parallel to the input shaft 10; and a transmission case 5 housing the input shaft 10, the counter shaft 30, the plurality of gear trains G1 to G5, and lubricating oil, wherein a driven gear for third speed 22 and a driven gear for first speed 21 are provided on the counter shaft 30, and a baffle plate 80 catching the oil scooped by the driven gear for third speed 22 and feeding the oil to the driven gear for first speed 21 is disposed adjacent to lateral sides of the driven gears 21, 23 in a predetermined inclined state where an oil level is inclined to a road surface when seen in a vehicle width direction so that the oil is deeper on a side of the driven gear for third speed 23 than on a side of the driven gear for first speed 21.

## Description

### BACKGROUND OF THE INVENTION

### Field of the Invention

The present invention relates to a lubricating structure for a transmission to be mounted in a vehicle, and belongs to a technical field of a vehicle transmission.

### Description of the Related Art

As a transmission mounted in a vehicle, a longitudinally mounted manual transmission for a front engine and rear drive vehicle is known including: an input shaft connected to a driving source such as an engine via a clutch; an output shaft disposed on the same axis as the input shaft and coupled to drive wheels; and a counter shaft disposed parallel to the input shaft and the output shaft, wherein a plurality of gear trains having different gear ratios are provided between the input shaft or the output shaft and the counter shaft to selectively cause a power transmission state, thereby achieving a plurality of forward shift stages and one reverse shift stage.

For such a manual transmission, to lubricate a gear meshing portion and prevent seizure of a portion to be lubricated such as a bearing for supporting each shaft, a so-called scooping oil feeding is generally performed such that a gear provided on the counter shaft usually disposed at a lower position than the input shaft and the output shaft rotates to scoop oil retained at a bottom of a transmission case and feed the oil to the portion to be lubricated in the transmission case.

Also, for example, during ascending or accelerating, or the like, the oil retained in the transmission case may flow to a vehicle rear side of the transmission case, and an oil level may be inclined to a road surface (vehicle horizontal direction) so as to be lower on a vehicle front side than on the vehicle rear side of the transmission case. Thus, if the transmission case retains a small amount of oil, the gear disposed on the vehicle front side is unlikely to be immersed in the oil under the inclined oil level. In this case, the gear disposed on the vehicle front side of the transmission case sometimes cannot scoop the oil, which causes a shortage of oil to be fed to the portion to be lubricated in the transmission case.

To prevent such a shortage of oil to be fed, the amount of oil retained in the transmission case may be increased. On the other hand, to meet the recent demand for fuel efficiency of an engine, it is preferable to reduce the amount of oil retained at the bottom of the transmission case. This allows a reduction in oil weight and a reduction in agitation resistance when the gear provided on the counter shaft scoops the oil.

In this respect, Japanese Patent Laid-Open No. 2013-29128 discloses a lubricating device for a transmission including a vertical wall that separates between a vehicle front side and a vehicle rear side in a transmission case housing a plurality of transmission gear trains. In the transmission case, oil is retained in a front chamber and a rear chamber of the transmission case defined by the vertical wall.

Thus, during ascending or accelerating, the oil retained in the front chamber of the transmission case is received by the vertical wall and prevented from flowing to the vehicle rear side. This prevents a reduction in oil level in the forward chamber, and allows a gear disposed in the front chamber to scoop the oil. This prevents an increase in amount of oil in the entire transmission case, and also allows the oil to be fed to a portion to be lubricated in the transmission case.

However, for the lubricating device for a transmission in Japanese Patent Laid-Open No. 2013-29128, the vertical wall needs to be provided in the transmission case, which may complicate a structure of the transmission case, increase a weight of the transmission case, and reduce assemblability of the transmission.

### SUMMARY OF THE INVENTION

Accordingly, the present invention has an object of ensuring an amount of oil to be fed to a portion to be lubricated in a transmission case and also allowing a reduction in amount of oil retained.

To achieve the object, a lubricating structure for a transmission according to the present invention is characterized by configurations as described below.

A lubricating structure for a transmission includes a first shaft disposed to extend in a vehicle front-rear direction, a second shaft disposed parallel to the first shaft below the first shaft, a plurality of transmission gear trains provided at axial intervals between the first shaft and the second shaft, and a transmission case housing the first shaft, the second shaft, the plurality of gear trains, and lubricating oil, and an oil feeder. The plurality of transmission gear trains include a first gear train having a first gear provided on the second shaft, and a second gear train having a second gear provided on the second shaft The oil feeder is configured to catch the oil scooped by the first gear and feed the oil to the second gear in a predetermined inclined state where an oil level is inclined when seen in a vehicle width direction so that the oil is deeper on a side of the first gear than on a side of the second gear.

Particularly, the oil feeder is disposed adjacent to lateral sides of the first gear and the second gear.

Further particularly, the predetermined inclined state is a state where the oil level is inclined to a horizontal line or a road surface when seen in a vehicle width direction so that the oil is deeper on a side of the first gear than on a side of the second gear.

Further particularly, a diameter of the first gear is smaller than a diameter of the second gear.

Further particularly, the first gear is disposed behind the second gear in a vehicle front-rear direction.

Further particularly, the oil feeder includes a first guide portion provided to extend circumferentially around an outer periphery of the first gear, an oil receiver disposed to face an upper end of the first guide portion and configured to receive the oil scooped by the first gear, and a trough disposed to extend from a lower part of the oil receiver to the second gear and configured to feed the oil received by the oil receiver to the second gear.

Further particularly, the first gear is formed by a helical gear, and the first guide portion includes a first vertical wall axially facing the first gear from a side on which the oil is dispersed due to an inclination of a tooth trace of the first gear.

Further particularly, the oil receiver includes a hood disposed to face an upper end of the first guide portion from above and configured to receive the oil dispersed circumferentially upward from a tooth surface of the first gear, and a second vertical wall that extends downward from the hood and receives the oil dispersed axially due to the inclination of the tooth trace of the first gear.

Further particularly, the oil feeder includes a second guide portion extending circumferentially around an outer periphery of the second gear. The second guide portion includes an opening for feeding, to a tooth surface of the second gear, the oil flowing through the trough toward the second gear.

Further particularly, the first shaft includes a cylindrical portion having therein an oil passage extending axially, and an oil feed hole extending through a peripheral wall of the cylindrical portion to introduce the oil from an outer periphery of the cylindrical portion into the oil passage. An upper end of the second guide portion includes an oil discharge portion configured to discharge the oil toward the oil feed hole.

Further particularly, the plurality of transmission gear trains further include a third gear train having a third gear provided between the first gear and the second gear on the second shaft. The oil feeder includes a third guide portion extending circumferentially around an outer periphery of the third gear between the first guide portion and the second guide portion. The trough extends axially on a radially outer side of the third guide portion so as to connect the first guide portion and the second guide portion.

Further particularly, at an upper end of the third guide portion, a first discharge portion configured to discharge the oil scooped by the third gear toward a meshing portion of the third gear train or a flange-like member provided on a lateral side of the third gear, and a second discharge portion configured to discharge the oil scooped by the third gear toward an oil collecting member disposed above the first shaft are provided axially side by side.

Further particularly, a transmission includes the above lubricating structure.

Further particularly, a vehicle includes the above transmission.

Further particularly, the transmission is a longitudinally mounted transmission.

Further particularly, a lubricating structure for a transmission according to a first aspect of the present application includes: a first shaft disposed to extend in a vehicle front-rear direction; a second shaft disposed parallel to the first shaft below the first shaft; a plurality of transmission gear trains provided at axial intervals between the first shaft and the second shaft; and a transmission case housing the first shaft, the second shaft, the plurality of gear trains, and lubricating oil, in which the plurality of transmission gear trains include a first gear train having a first gear provided on the second shaft, and a second gear train having a second gear provided on the second shaft, and an oil feeder is disposed adjacent to lateral sides of the first gear and the second gear, the oil feeder catching the oil scooped by the first gear and feeding the oil to the second gear in a predetermined inclined state where an oil level is inclined to a road surface when seen in a vehicle width direction so that the oil is deeper on a side of the first gear than on a side of the second gear.

In the lubricating structure for a transmission of a second aspect according to the first aspect, the first gear has a smaller diameter than the second gear.

In the lubricating structure for a transmission of a third aspect according to the first or second aspect, the first gear is disposed on a vehicle rear side of the second gear.

In the lubricating structure for a transmission of a fourth aspect according to any one of the first to third aspects, the oil feeder includes a first guide portion provided to extend circumferentially around an outer periphery of the first gear, an oil receiver disposed to face an upper end of the first guide portion to receive the oil scooped by the first gear, and a trough disposed to extend from a lower part of the oil receiver to the second gear to feed the oil received by the oil receiver to the second gear.

In the lubricating structure for a transmission of a fifth aspect according to the fourth aspect, the first gear is formed by a helical gear, and the first guide portion includes a first vertical wall axially facing the first gear from a side on which the oil is dispersed due to an inclination of a tooth trace of the first gear.

In the lubricating structure for a transmission of a sixth aspect according to the fourth or fifth aspect, the oil receiver includes a hood that is disposed to face an upper end of the first guide portion from above and receives the oil dispersed circumferentially upward from a tooth surface of the first gear, and a second vertical wall that extends downward from the hood and receives the oil dispersed axially due to the inclination of the tooth trace of the first gear.

In the lubricating structure for a transmission of a seventh aspect according to the any one of the fourth to sixth aspects, the oil feeder includes a second guide portion extending circumferentially around an outer periphery of the second gear, and the second guide portion includes an opening for feeding, to a tooth surface of the second gear, the oil flowing through the trough toward the second gear.

In the lubricating structure for a transmission of an eighth aspect according to the seventh aspect, the first shaft includes a cylindrical portion having therein an oil passage extending axially, and an oil feed hole extending through a peripheral wall of the cylindrical portion to introduce the oil from an outer periphery of the cylindrical portion into the oil passage, and an upper end of the second guide portion includes an oil discharge portion for discharging the oil toward the oil feed hole.

In the lubricating structure for a transmission of a ninth aspect according to the seventh or eighth aspect, the plurality of transmission gear trains further include a third gear train having a third gear provided between the first gear and the second gear on the second shaft, the oil feeder includes a third guide portion extending circumferentially around an outer periphery of the third gear between the first guide portion and the second guide portion, and the trough extends axially on a radially outer side of the third guide portion so as to connect the first guide portion and the second guide portion.

In the lubricating structure for a transmission of a tenth aspect according to the ninth aspect, at an upper end of the third guide portion, a first discharge portion that discharges the oil scooped by the third gear toward a meshing portion of the third gear train or a flange-like member provided on a lateral side of the third gear, and a second discharge portion that discharges the oil scooped by the third gear toward an oil collecting member disposed above the first shaft are provided axially side by side.

According to the first aspect, even if the second gear is not immersed in the oil retained at the bottom of the transmission case, the oil scooped by the first gear is fed to the second gear by the oil feeder, thereby reliably lubricating the second gear.

The second gear can be lubricated without increasing the amount of oil retained to the extent that the second gear is always immersed in the oil, thereby reducing the amount of oil retained. This can effectively reduce agitation resistance when the gear on the second shaft scoops the oil during traveling of the vehicle and an oil weight.

Further, an oil feed path from the first gear to the second gear is formed using the oil feeder disposed adjacent to the lateral sides of the first gear and the second gear. Thus, as compared to a case using a typical oil feed component disposed spaced above from the gears, the oil feed path can be formed to be short and simple. Since the second gear can be reliably lubricated without being always immersed in the oil, there is no need to provide a partition wall or the like for defining an oil reservoir in the transmission case to facilitate immersion of the second gear. Thus, the second gear can be reliably lubricated with a generally simple configuration.

According to the second aspect, in the predetermined inclined state, the oil can be fed via the oil feeder from the first gear having a relatively small diameter and disposed in an axial position where the first gear is relatively likely to be immersed in the oil to the second gear having a relatively large diameter and disposed in an axial position where the second gear is relatively unlikely to be immersed in the oil. Thus, the oil feeder can be used to reliably lubricate the second gear, and also, for example, the second gear can be disposed at an axial end where the second gear is unlikely to be immersed in the oil, thereby satisfactorily ensuring flexibility in layout of the gear train.

According to the third aspect, in a case where a depth from the oil level to the bottom of the transmission case increases toward the vehicle rear side as during ascending and/or accelerating, the oil can be reliably fed from the first gear located on the relatively rear side and immersed in the oil to the second gear located on the relatively front side and unlikely to be immersed in the oil.

During ascending and/or accelerating when a larger driving force than during descending and decelerating is required, which is likely to cause insufficient lubrication, the oil feeding to the second gear by the oil feeder described above can be used to effectively prevent the insufficient lubrication.

According to the fourth aspect, the oil held on the tooth surface of the first gear immersed in the oil below the oil level is guided above the oil level by the first guide portion provided around the outer periphery of the first gear, thereby easily ensuring the amount of oil scooped by the first gear.

The oil scooped by the first gear and the first guide portion are received by the oil receiver, fed to the trough below the oil receiver, and fed through the trough to the second gear. Thus, even if the second gear is not immersed in the oil, the oil fed via the oil feeder can effectively lubricate the second gear.

According to the fifth aspect, the first gear is formed by the helical gear. Thus, part of the oil scooped by the first gear is dispersed toward one axial side of the first gear due to the inclination of the tooth trace of the first gear. The oil thus dispersed axially from the first gear can be received by the first vertical wall of the first guide portion. Thus, out of the oil scooped by the first gear, a large amount of oil to be fed to the oil receiver via the first guide portion can be ensured, thereby increasing the amount of oil to be fed to the second gear and thus easily lubricating the second gear.

According to the sixth aspect, out of the oil scooped by the first gear, the oil dispersed circumferentially upward from the tooth surface of the first gear is received by the hood of the oil receiver, and the oil dispersed axially due to the inclination of the tooth trace of the first gear is received by the second vertical wall of the oil receiver. Thus, most of the oil scooped by the first gear can be effectively received by the oil receiver.

This can satisfactorily ensure the amount of oil to be fed from the first gear via the oil receiver to the trough, and thus effectively facilitate feeding of the oil via the trough to the second gear.

According to the seventh aspect, in the predetermined inclined state described above, the oil scooped by the first gear and fed to the trough is fed through the opening in the second guide portion to the tooth surface of the second gear. The oil thus fed to the tooth surface of the second gear is circumferentially guided by the second guide portion and effectively scooped by the second gear. This allows the meshing portion of the second gear train to be effectively lubricated, and allows most of the oil scooped by the second gear to be effectively received by the oil receiver.

According to the eighth aspect, the oil guided to a circumferential receiving side by the second guide portion and scooped by the second gear is discharged from the oil discharge portion provided at the upper end of the second guide portion toward the oil feed hole in the first shaft. Thus, the oil scooped by the second gear is effectively introduced through the oil feed hole into the oil passage in the first shaft. This allows the oil to be effectively fed to each portion to be lubricated in the transmission case through the oil passage.

According to the ninth aspect, the oil scooped by the first gear, among the first, second, and third gears on the second shaft, disposed in a position where the first gear is the most likely to be immersed in the oil in the predetermined inclined state can be fed to the second gear farther from the third gear rather than the third gear adjacent to the first gear. This allows the second gear to be effectively lubricated, the second gear being disposed in a position where the second gear is the least likely to be immersed in the oil among the three gears in the predetermined inclined state.

The oil scooped by the third gear can be guided circumferentially upward by the third guide portion provided between the first guide portion and the second guide portion of the oil feeder. This allows the third gear train to be effectively lubricated, and allows the oil dispersed by scooping with the third gear to be easily used to lubricate a different portion to be lubricated.

According to the tenth aspect, the oil scooped by the third gear is discharged from the first discharge portion of the third guide portion toward the meshing portion of the third gear train or the flange-like member provided on the lateral side of the third gear, and discharged from the second discharge portion of the third guide portion toward the oil collecting member above the first shaft. Thus, the oil scooped by the third gear can be used to both feed the oil to the meshing portion of the third gear train or the flange-like member provided on the lateral side of the third gear and feed the oil via the oil collecting member to the portion to be lubricated.

### BRIEF DESCRIPTION OF THE DRAWINGS

FIG. 1 is a schematic view of a transmission including a lubricating structure according to an embodiment of the present invention;
FIG. 2 is an enlarged side view of essential portions including a baffle plate and therearound provided in the transmission in FIG. 1;
FIG. 3 is a perspective view of the baffle plate seen from a side opposite to a gear;
FIG. 4 is a perspective view of the baffle plate seen from a side of the gear;
FIG. 5 is a sectional view taken along the line A-A in FIG. 2 showing an example of a flow of oil around the baffle plate;
FIG. 6 is a sectional view taken along the line B-B in FIG. 2 showing an example of a flow of oil around the baffle plate;
FIG. 7 is a sectional view taken along the line C-C in FIG. 2 showing an example of a flow of oil around the baffle plate;
FIG. 8 is a schematic view of a relationship between the transmission and a reduced volume portion of a transmission case in this embodiment; and
FIG. 9 is a perspective view of the reduced volume portion of the transmission case in this embodiment seen from inside the transmission case.

### DETAILED DESCRIPTION OF THE PREFERRED EMBODIMENT

Now, with reference to the accompanying drawings, an embodiment of the present invention will be described.

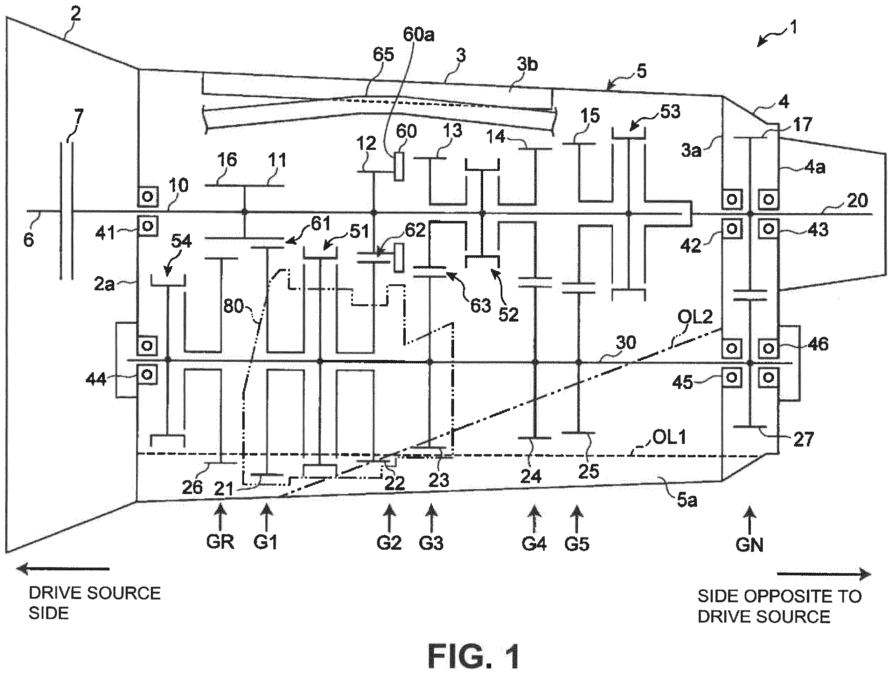

FIG. 1 is a schematic view of a transmission including a lubricating structure according to an embodiment of the present invention. As shown in FIG. 1, a transmission 1 according to the embodiment of the present invention is particularly a longitudinally mounted manual transmission for a front engine and rear drive vehicle, and configured to be able to particularly achieve forward six speeds and reverse one speed. The transmission 1 particularly includes a transmission case 5. The transmission case 5 includes a clutch housing 2, a transmission housing 3, and an extension housing 4 disposed in this order from a vehicle front side.

In the transmission case 5, an input shaft 10 as a first shaft connected to an output shaft 6 of a driving source such as an engine (not shown), and an output shaft 20 disposed on the same axis as the input shaft 10 and coupled to rear wheels are provided. The input shaft 10 and the output shaft 20 are disposed substantially parallel to a vehicle horizontal direction (direction parallel to a road surface) or to be slightly inclined rearward.

The input shaft 10 is particularly connected to the driving source so as to be connectable/disconnectable via a clutch 7 housed in the clutch housing 2. The input shaft 10 is, on a driving source side, rotatably supported via a bearing 41 by a vertical wall 2a of the clutch housing 2. An end of the input shaft 10 on a side opposite to the driving source is rotatably fitted to an end of the output shaft 20 on the driving source side.

The output shaft 20 is rotatably supported via a bearing 42 and a bearing 43 by a vertical wall 3a of the transmission housing 3 and a vertical wall 4a of the extension housing 4.

In the transmission case 5, a counter shaft 30 as a second shaft disposed parallel to the input shaft 10 and the output shaft 20 is particularly provided at a lower position than the input shaft 10 and the output shaft 20. The counter shaft 30 is, on the driving source side, rotatably supported via a bearing 44 by the vertical wall 2a of the clutch housing 2, and on the side opposite to the driving source, rotatably supported via a bearing 45 and a bearing 46 by the vertical wall 3a of the transmission housing 3 and the vertical wall 4a of the extension housing 4.

On the input shaft 10, a drive gear for first speed 11, a drive gear for second speed 12, a drive gear for third speed 13, a drive gear for fourth speed 14, and a drive gear for fifth speed 15 are provided in this order from the driving source side, and a drive gear for reverse speed 16 is disposed on the driving source side of the drive gear for first speed 11. The drive gear for first speed 11, the drive gear for second speed 12, and the drive gear for reverse speed 16 are secured on the input shaft 10, and the drive gear for third speed 13, the drive gear for fourth speed 14, and the drive gear for fifth speed 15 are particularly loosely fitted on the input shaft 10. The drive gear for first speed 11 and the drive gear for reverse speed 16 are particularly integrally formed. A driven gear for output 17 housed in the extension housing 4 is secured on the output shaft 20.

On the counter shaft 30, a driven gear for first speed 21 as a second gear, a driven gear for second speed 22 as a third gear, a driven gear for third speed 23 as a first gear, a driven gear for fourth speed 24, a driven gear for fifth speed 25, and a drive gear for output 27 are particularly provided in this order from the driving source side, and a driven gear for reverse speed 26 is particularly disposed on the driving source side of the driven gear for first speed 21. The driven gear for first speed 21, the driven gear for second speed 22, and the driven gear for reverse speed 26 are loosely fitted on the counter shaft 30, and the driven gear for third speed 23, the driven gear for fourth speed 24, the driven gear for fifth speed 25, and the drive gear for output 27 are secured on the counter shaft 30.

The drive gear for first speed 11, the drive gear for second speed 12, the drive gear for third speed 13, the drive gear for fourth speed 14, and the drive gear for fifth speed 15 provided on the input shaft 10, and the driven gear for first speed 21, the driven gear for second speed 22, the driven gear for third speed 23, the driven gear for fourth speed 24, and the driven gear for fifth speed 25 provided on the counter shaft 30 and always meshing with the drive gear for first speed 11, the drive gear for second speed 12, the drive gear for third speed 13, the drive gear for fourth speed 14, and the drive gear for fifth speed 15, respectively constitute a gear train for first speed G1, a gear train for second speed G2, a gear train for third speed G3, a gear train for fourth speed G4, and a gear train for fifth speed G5, respectively. A gear train for sixth speed is formed by directly coupling the input shaft 10 and the output shaft 20.

Among the drive gears 11, 12, 13, 14, 15 of the gear trains for forward transmission provided on the input shaft 10, the drive gears for higher speed, that is, the drive gears located closer to a vehicle rear side have larger diameters. Among the driven gears 21, 22, 23, 24, 25 provided on the counter shaft 30, the driven gears for higher shift stages, that is, the driven gears located closer to the vehicle rear side have smaller diameters.

Particularly, the drive gear for reverse speed 16 provided on the input shaft 10 and the driven gear for reverse speed 26 provided on the counter shaft 30 do not mesh with each other. The drive gear for reverse speed 16 and the driven gear for reverse speed 26 always mesh with an idle gear for reverse speed (not shown) loosely fitted on a reverse shaft (not shown) disposed parallel to the input shaft 10, the output shaft 20, and the counter shaft 30 in the transmission case 5. The drive gear for reverse speed 16, the driven gear for reverse speed 26, and the idle gear for reverse speed constitutes a gear train for reverse speed GR.

Particularly, the driven gear for output 17 provided on the output shaft 20 and the drive gear for output 27 provided on the counter shaft 30 and always meshing with the driven gear for output 17 constitute a gear train for deceleration GN that decelerates rotation of the counter shaft 30 at a certain reduction gear ratio and transmits the rotation to the output shaft 20. The gear train for deceleration GN is provided closer to the side opposite to the driving source than the gear train for fifth speed G5. The reduction gear ratio of the gear train for deceleration GN may be set to 1.

Further, a synchronous apparatus for first and second speeds 51 is provided between the driven gear for first speed 21 and the driven gear for second speed 22 on the output shaft 20, a synchronous apparatus for third and fourth speeds 52 is provided between the drive gear for third speed 13 and the drive gear for fourth speed 14 on the input shaft 10, a synchronous apparatus for fifth and sixth speeds 53 is provided on the side opposite to the driving source of the drive gear for fifth speed 15 on the input shaft 10, and a synchronous apparatus for reverse speed 54 is provided on the driving source side of the driven gear for reverse speed 26 on the output shaft 20.

The synchronous apparatus for first and second speeds 51 particularly fixes the driven gear for first speed 21 or the driven gear for second speed 22 to the counter shaft 30 to bring the gear train for first speed G1 or the gear train for second speed G2 into a power transmission state when a change lever (not shown) is operated to first speed or second speed.

Particularly, when the change lever is operated to the first speed or the second speed, the synchronous apparatus for first and second speeds 51 couples the driven gear for first speed 21 or the driven gear for second speed 22 with the counter shaft 30 so that rotation of the input shaft 10 is transmitted to the counter shaft 30 by the gear train for first speed G1 or the gear train for second speed G2 and that the rotation transmitted to the counter shaft 30 is decelerated at a certain reduction gear ratio and transmitted to the output shaft 20 by the gear train for deceleration GN.

Particularly, the synchronous apparatus for third and fourth speeds 52 fixes the drive gear for third speed 13 or the drive gear for fourth speed 14 to the counter shaft 30 to bring the gear train for third speed G3 or the gear train for fourth speed G4 into a power transmission state when the change lever is operated to third speed or fourth speed.

Particularly, when the change lever is operated to the third speed or the fourth speed, the synchronous apparatus for third and fourth speeds 52 couples the drive gear for third speed 13 or the drive gear for fourth speed 14 with the input shaft 10 so that the rotation of the input shaft 10 is transmitted to the counter shaft 30 by the gear train for third speed G3 or the gear train for fourth speed G4 and that the rotation transmitted to the counter shaft 30 is decelerated at a certain reduction gear ratio and transmitted to the output shaft 20 by the gear train for deceleration GN.

Particularly, the synchronous apparatus for fifth and sixth speeds 53 fixes the drive gear for fifth speed 15 to the input shaft 10 to bring the gear train for fifth speed G5 into a power transmission state when the change lever is operated to fifth speed, and directly couples the input shaft 10 with the output shaft 20 when the change lever is operated to sixth speed.

Particularly, when the change lever is operated to the fifth speed, the synchronous apparatus for fifth and sixth speeds 53 couples the drive gear for fifth speed 15 with the input shaft 10 so that the rotation of the input shaft 10 is transmitted to the counter shaft 30 by the gear train for fifth speed G5 and that the rotation transmitted to the counter shaft 30 is decelerated at a certain reduction gear ratio and transmitted to the output shaft 20 by the gear train for deceleration GN. On the other hand, when the change lever is operated to the sixth speed, the synchronous apparatus for fifth and sixth speeds 53 couples the input shaft 10 with the output shaft 20 so that the rotation of the input shaft 10 is directly transmitted to the output shaft 20 without via the counter shaft 30.

Particularly, the synchronous apparatus for reverse speed 54 fixes the driven gear for reverse speed 26 to the counter shaft 30 to bring the gear train for reverse speed GR into a power transmission state when the change lever is operated to reverse speed.

Particularly, when the change lever is operated to the reverse speed, the synchronous apparatus for reverse speed 54 couples the driven gear for reverse speed 26 with the counter shaft 30 so that the rotation of the input shaft 10 is transmitted to the counter shaft 30 by the gear train for reverse speed GR and that the rotation transmitted to the counter shaft 30 is decelerated at a certain reduction gear ratio and transmitted to the output shaft 20 by the gear train for deceleration GN.

In this embodiment, the drive gears 11 to 16 provided on the input shaft 10 and the driven gears 21 to 26 provided on the counter shaft 30 of the gear trains GR, G1 to G5 are particularly helical gears. Specifically, tooth traces of the gears 11 to 16 and 21 to 26 each have a predetermined twist angle to an axial direction of the gears. The drive gear for output 27 and the driven gear for output 17 of the gear train for deceleration GN are also helical gears.

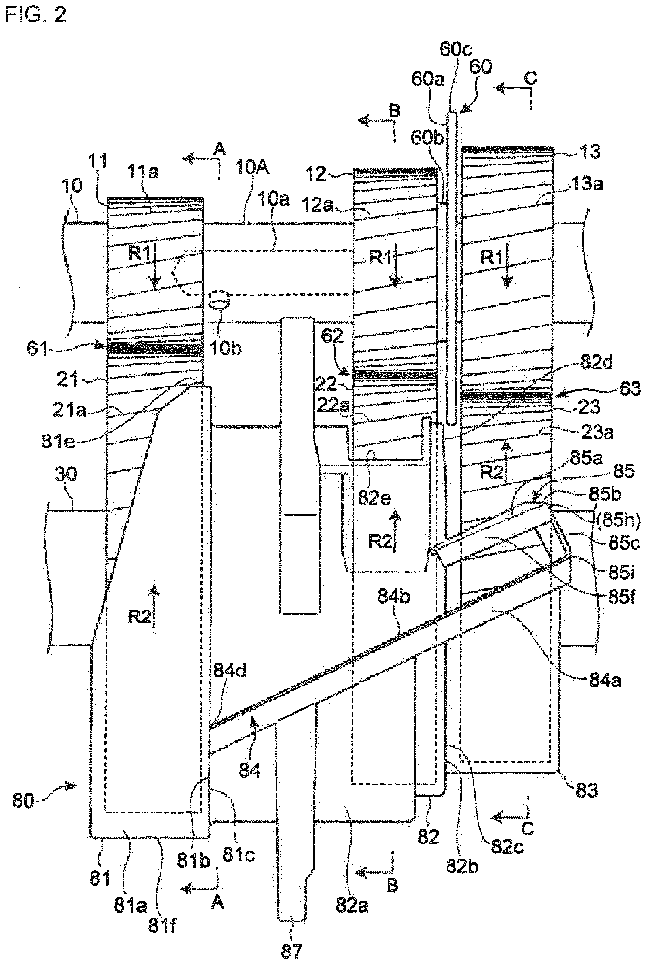

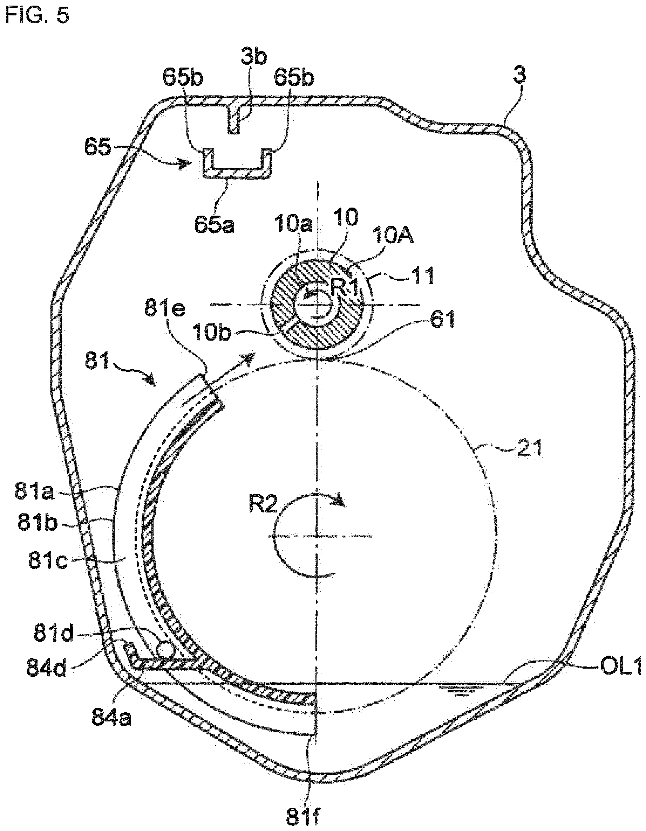

With reference to FIGS. 2 and 5 to 7, the gear trains for first to third speeds G1 to G3 will be specifically described. The drive gears for first to third speeds 11 to 13 particularly have tooth traces 11a to 13a with a predetermined twist angle to an axial direction of the drive gears for first to third speeds 11 to 13 (the same as the axial direction of the input shaft 10). When the input shaft 10 and the drive gears for first to third speeds 11 to 13 rotate in an R1 direction (see FIGS. 5 to 7), ends of the tooth traces 11a to 13a on the driving source side are disposed on a front side in a rotational direction (moving direction) R2 as compared to ends on the side opposite to the driving source.

Particularly, the driven gears for first to third speeds 21 to 23 meshing with the drive gears for first to third speeds 11 to 13, respectively, have tooth traces 21a to 23a with a predetermined twist angle to an axial direction of the driven gears for first to third speeds 21 to 23 (the same as the axial direction of the counter shaft 30). During forward traveling, the counter shaft 30 and the drive gears for first to third speeds 11 to 13 rotate in the R2 direction (see FIGS. 5 to 7) opposite to the rotational direction R1 of the input shaft 10. At this time, ends of the tooth traces 21a to 23a on the driving source side are disposed on the front side in the rotational direction (moving direction) R2 as compared to ends on the side opposite to the driving source.

The tooth traces 11a to 13a and 21a to 23a may be inclined to the side opposite to the shown side. Specifically, the ends of the tooth traces 11a to 13a and 21a to 23a opposite to the driving source side may be disposed on the front side in the rotational directions (moving directions) R1, R2 as compared to the ends on the driving source side.

The transmission case 5 holds oil for lubricating various portions to be lubricated such as meshing portions of the gears. Thus, an oil reservoir 5a retaining the oil is formed at a bottom of the transmission case 5.

The oil retained in the oil reservoir 5a is scooped by the driven gear immersed in the oil, thereby performing so-called scooping oil feeding. The scooping oil feeding lubricates meshing portions between the driven gears and the drive gears and portions to be lubricated other than the meshing portions.

A dashed line OL1 in FIG. 1 shows an oil level in the oil reservoir 5a in a vehicle stopping state on a horizontal road surface. At this time, the oil level OL1 is disposed parallel to the road surface and the vehicle horizontal direction when seen in the vehicle width direction. An amount of oil retained in the transmission case 5 is particularly set so that lower parts of the driven gears for first and second speeds 21, 22 are immersed in the oil in the oil reservoir 5a in a state where the oil level OL1 is parallel to the horizontal line or the road surface when seen in the vehicle width direction (hereinafter referred to as "parallel state"). At this time, the oil level OL1 of the oil reservoir 5a is disposed parallel to the road surface, and the tooth traces 21a, 22a at the lowermost parts and therearound of the driven gears for first and second speeds 21, 22 are immersed in the oil in the oil reservoir 5a. In this embodiment, a lower part of the driven gear for reverse speed 26 is also immersed in the oil in the oil reservoir 5a in the parallel state.

At this time, the driven gears for third, fourth, and fifth speeds 23, 24, 25 are disposed above the oil level OL1, thereby reducing the number of gears immersed in the oil and thus reducing agitation resistance. The meshing portions of the gears of the gear trains for third, fourth, and fifth speeds G3, G4, G5 can be lubricated by oil feeding via an oil collecting member 65 described later. In the parallel state, part of the driven gears for third to fifth speeds 23 to 25 (for example, the driven gear for third speed 23) may be immersed in the oil in the oil reservoir 5a.

The lower parts of the driven gears for first and second speeds 21, 22 are immersed in the oil in the oil reservoir 5a, and thus the driven gears for first and second speeds 21, 22 rotate to scoop the oil in the oil reservoir 5a. The oil scooped by the driven gears for first and second speeds 21, 22 is fed to the meshing portions 61, 62 between the drive gears for first and second speeds 11, 12 and the driven gears for first and second speeds 21, 22 and other portions to be lubricated.

As shown in FIG. 2, a baffle plate 80 as an oil feeder is particularly disposed adjacent to lateral sides of the driven gear for first speed 21, the driven gear for second speed 22, and the driven gear for third speed 23. The baffle plate 80 is made of, for example, resin, but a material for the baffle plate 80 is not particularly limited.

The baffle plate 80 particularly has a guide portion for first speed 81 as a second guide portion for guiding the oil scooped by the driven gear for first speed 21, and a guide portion for second speed 82 as a third guide portion for guiding the oil scooped by the driven gear for second speed 22. The baffle plate 80 further has a guide portion for third speed 83 as a first guide portion for guiding the oil scooped by the driven gear for third speed 23, and the guide portion for third speed 83 and configurations relating thereto will be described later.

As shown in FIGS. 2 to 5, the guide portion for first speed 81 particularly has an outer peripheral surface 81a provided around an outer peripheral surface of the driven gear for first speed 21, and an extending portion 81c extending radially inward from an edge 81b of the outer peripheral surface 81a on the side opposite to the driving source.

As shown in FIGS. 2 and 5, the outer peripheral surface 81a of the guide portion for first speed 81 is particularly disposed to face the outer peripheral surface of the driven gear for first speed 21 with a certain gap therebetween, and has a substantially semicircular shape when seen in the axial direction so as to extend circumferentially around the outer peripheral surface of the driven gear for first speed 21. An upper end 81e of the outer peripheral surface 81a is disposed near an oblique lower side of an upper end of the driven gear for first speed 21, and a lower end 81f of the outer peripheral surface 81a is disposed near a lower side of a lower end of the driven gear for first speed 21. An axial width of the outer peripheral surface 81a is larger than a width of the driven gear for first speed 21 at a lower part of the outer peripheral surface 81a. The edge 81b of the outer peripheral surface 81a on the side opposite to the driving source is disposed axially offset from the driven gear for first speed 21 toward the driven gear for second speed 22. An axial width of a part extending from an intermediate part in a length direction of the outer peripheral surface 81a to the upper end 81e gradually decreases from bottom to top toward the side opposite to the driving source.

The extending portion 81c of the guide portion for first speed 81 is particularly provided over the entire circumferential length of the guide portion for first speed 81. The extending portion 81c is disposed in an axial position between the driven gear for first speed 21 and the driven gear for second speed 22. A radially inner edge of the extending portion 81c is disposed to face a surface of the driven gear for first speed 21 on the side opposite to the driving source with a predetermined gap therebetween. The extending portion 81c is particularly formed to cover an outer edge of the surface of the driven gear for first speed 21 on the side opposite to the driving source from bottom to top. A radial dimension of the extending portion 81c is at least larger than a tooth depth (radial dimension from a tooth top to a tooth bottom) of the driven gear for first speed 21. The extending portion 81c can receive the oil dispersed slightly closer to the side opposite to the driving source than an axial scooping position due to the inclination of the tooth trace 21a of the driven gear for first speed 21 of the gear train for first speed G1, which is formed by the helical gear as described above. This can increase the amount of oil held between the outer periphery of the driven gear for first speed 21 and the guide portion for first speed 81.

The oil scooped by the driven gear for first speed 21 flows upward from the oil reservoir 5a through the gap between the outer periphery of the driven gear for first speed 21 and the outer peripheral surface 81a of the guide portion for first speed 81. This ensures the amount of oil to be fed to the meshing portion 61 between the driven gear for first speed 21 and the drive gear for first speed 11. The gap is set to such a value that as large an amount of oil as possible flows through the gap with little influence on rotation resistance of the driven gear for first speed 21.

In the transmission 1, the oil needs to be fed to gaps between inner peripheral surfaces of the loosely fitted gears 13, 14, 15 rotatably fitted on the input shaft 10 and the outer peripheral surface of the input shaft 10 or portions to be lubricated such as slide portions of the synchronous apparatuses 52, 53 provided on the input shaft 10. However, the loosely fitted gears 13, 14, 15 and the synchronous apparatuses 52, 53 provided on the input shaft 10 are disposed above the counter shaft 30, and thus it is sometimes difficult to bring the oil to the loosely fitted gears 13, 14, 15 and the synchronous apparatuses 52, 53 by scooping oil feeding with the driven gears 21, 22 on the counter shaft 30.

In this respect, the input shaft 10 particularly includes a cylindrical portion 10A having therein a main oil path 10a as an oil passage axially extending along a central axis of the input shaft 10. The cylindrical portion 10A of the input shaft 10 particularly includes a branch oil path (not shown) radially extending through a peripheral wall of the cylindrical portion 10A in each axial position corresponding to a portion to be lubricated. The main oil path 10a particularly communicates with the outer periphery of the cylindrical portion 10A through the branch oil path. Thus, the oil fed to the main oil path 10a is fed to the portion to be lubricated outside the cylindrical portion 10A.

Oil feeding to the main oil path 10a in the input shaft 10 in this embodiment will be described.

The cylindrical portion 10A of the input shaft 10 further includes an oil feed hole 10b radially extending through the peripheral wall of the cylindrical portion 10A. Thus, the main oil path 10a communicates with the outer periphery of the cylindrical portion 10A through the oil feed hole 10b, and the oil is introduced into the oil feed hole 10b from outside the cylindrical portion 10A to feed the oil to the main oil path 10a. The oil feed hole 10b is disposed, in the axial direction, in a position between the drive gear for first speed 11 and the drive gear for second speed 12, and more specifically, in a position adjacent to the side opposite to the driving source of the drive gear for first speed 11. Thus, the oil feed hole 10b communicates with around an end of the main oil path 10a on the driving source side (upstream side).

As described above, the edge 81b of the outer peripheral surface 81a of the guide portion for first speed 81 on the side opposite to the driving source is disposed in an axial position between the driven gear for first speed 21 and the driven gear for second speed 22. The oil scooped by the driven gear for first speed 21 is guided to the guide portion for first speed 81 while being brought to the side opposite to the driving source in the axial direction due to the inclination of the tooth trace 21a. For these reasons, part of the oil scooped by the driven gear for first speed 21 and discharged from the upper end 81e of the guide portion for first speed 81 is effectively guided toward the oil feed hole 10b in the input shaft 10. Specifically, the upper end 81e of the guide portion for first speed 81 functions as an oil discharge portion that discharges the oil scooped by the driven gear for first speed 21 toward the oil feed hole 10b.

In the outer peripheral surface of the input shaft 10, a circumferential position of the oil feed hole 10b changes according to the rotation of the input shaft 10. Thus, the oil discharged from the upper end of the guide portion for first speed 81 may be fed to a circumferential part shifted from the oil feed hole 10b in the outer peripheral surface of the input shaft 10. Even in such a case, the oil can be indirectly fed along the outer peripheral surface of the input shaft 10 to the oil feed hole 10b.

As shown in FIGS. 2 to 4 and 6, the guide portion for second speed 82 particularly includes an outer peripheral surface 82a provided around an outer peripheral surface of the driven gear for second speed 22, and an extending portion 82c extending radially inward from an edge 82b of the outer peripheral surface 82a on the side opposite to the driving source.

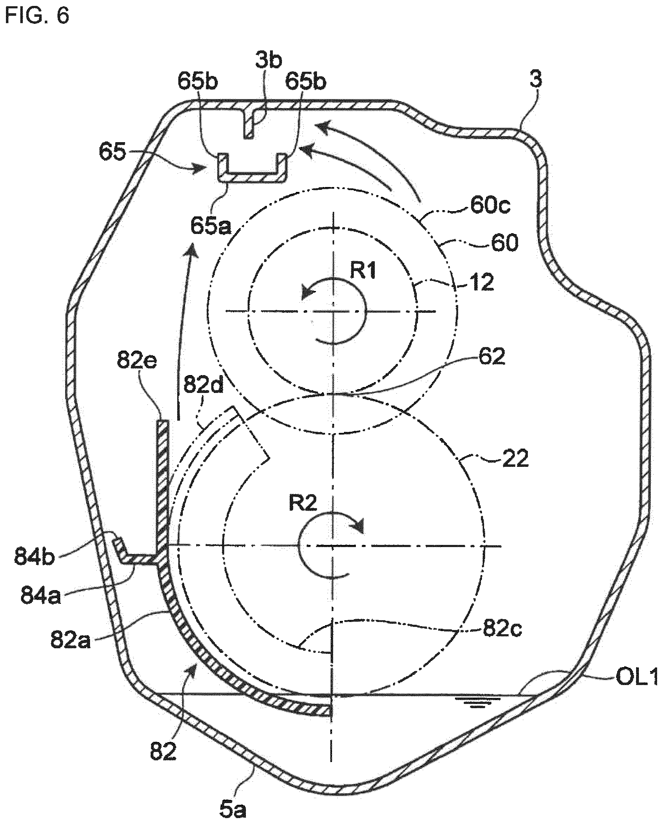

As shown in FIG. 6, the outer peripheral surface 82a of the guide portion for second speed 82 is particularly disposed to face the outer peripheral surface of the driven gear for second speed 22 with a certain gap therebetween, and has a substantially quadrant shape when seen in the axial direction so as to extend circumferentially around the outer peripheral surface of the driven gear for second speed 22. An axial width of the outer peripheral surface 82a is larger than a width of the driven gear for second speed 22 at a lower part of the outer peripheral surface 82a. An upper end of the outer peripheral surface 82a is disposed near a lateral side of a middle part in the up-down direction of the driven gear for second speed 22, and a lower end of the outer peripheral surface 82a is disposed near a lower side of a lower end of the driven gear for second speed 22.

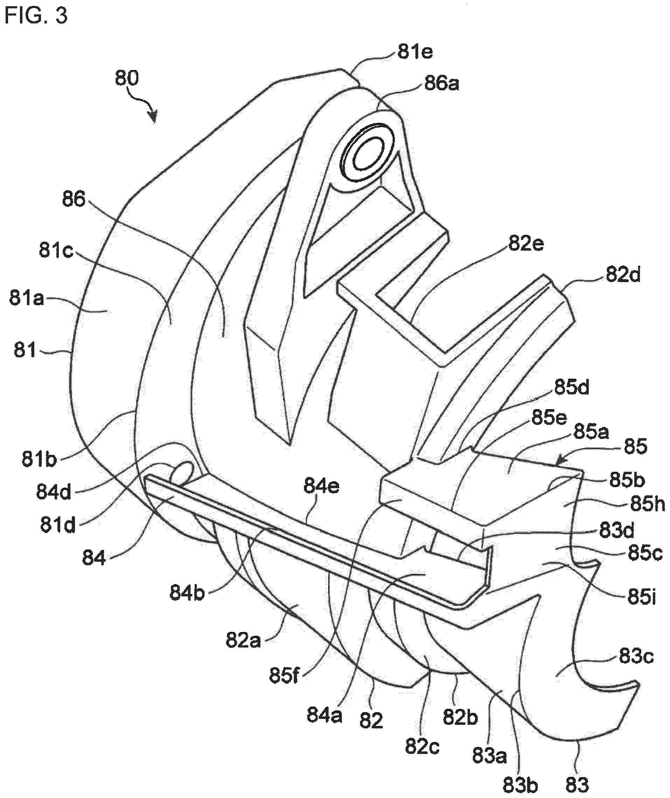

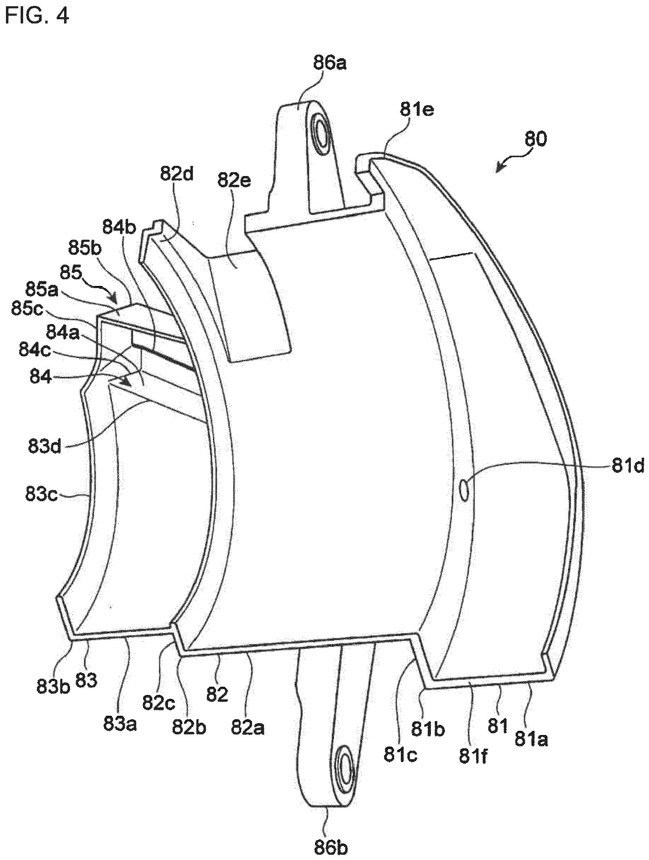

As shown in FIGS. 3 and 4, a connecting surface 86 is provided continuously with the driving source side of the outer peripheral surface 82a in the axial direction. An edge of the connecting surface 86 on the driving source side is continuous with a radially inner edge of the extending portion 81c of the guide portion for first speed 81. Thus, the guide portion for first speed 81 and the guide portion for second speed 82 disposed with an axial space therebetween are connected by the connecting surface 86. On an outer peripheral surface of the connecting surface 86, a pair of upper and lower portions to be mounted 86a, 86b protrude. The portions to be mounted 86a, 86b are secured to the transmission case 5, for example, by bolts, and thus the baffle plate 80 is secured to the transmission case 5.

The extending portion 82c of the guide portion for second speed 82 circumferentially protrudes upward from the outer peripheral surface 82a. The extending portion 82c is disposed in an axial position between the driven gear for second speed 22 and the driven gear for third speed 23. The extending portion 82c is disposed to face a surface of the driven gear for second speed 22 on the side opposite to the driving source with a predetermined gap therebetween. The extending portion 82c is formed to cover an outer edge of the surface of the driven gear for second speed 22 on the side opposite to the driving source from bottom to top. A radial dimension of the extending portion 82c is at least larger than a tooth depth of the driven gear for second speed 22. The extending portion 82c can receive the oil dispersed slightly closer to the side opposite to the driving source than an axial scooping position due to the inclination of the tooth trace 22a of the driven gear for second speed 22 of the gear train for second speed G2, which is formed by the helical gear as described above. This can increase the amount of oil held between the outer periphery of the driven gear for second speed 22 and the guide portion for second speed 82.

The guide portion for second speed 82 further includes a first discharge portion 82d and a second discharge portion 82e extending from an upper end of the outer peripheral surface 82a and provided side by side in the axial direction of the driven gear for second speed 22. In this embodiment, the first discharge portion 82d is located on the side opposite to the driving source, and the second discharge portion 82e is located on the driving source side.

### First discharge portion

The first discharge portion 82d is particularly formed to extend in an arc shape continuously with the outer peripheral surface 82a when seen in the axial direction of the driven gear for second speed 22. The upper end of the first discharge portion 82d is particularly disposed near an oblique lower side of the meshing portion 62 between the drive gear for second speed 12 and the driven gear for second speed 22. Thus, the first discharge portion 82d guides the oil scooped by the driven gear for second speed 22 to be dispersed obliquely upward in a tangential direction from the upper end of the first discharge portion 82d. The oil thus discharged from the first discharge portion 82d is fed toward the meshing portion 62.

Thus, the oil scooped by the driven gear for second speed 22 particularly flows upward from the oil reservoir 5a through the gap between the outer periphery of the driven gear for second speed 22 and the outer peripheral surface 82a and the first discharge portion 82d of the guide portion for second speed 82. This ensures the amount of oil to be fed to the meshing portion 62 between the driven gear for second speed 22 and the drive gear for second speed 12. The gap is set to such a value that as large an amount of oil as possible flows through the gap with little influence on rotation resistance of the driven gear for second speed 22.

On the other hand, the second discharge portion 82e linearly extends upward from the outer peripheral surface 82a toward the oil collecting member 65 described later (strictly speaking, a lateral side of the oil collecting member 65 opposite to the drive gear for second speed 12) when seen in the axial direction of the driven gear for second speed 22. Thus, the second discharge portion 82e guides the oil scooped by the driven gear for second speed 22 to be discharged upward toward the oil collecting member 65 (strictly speaking, a lateral side of the oil collecting member 65 opposite to the drive gear for second speed 12) along a length direction of the oil collecting member 65.

As shown in FIG. 6, in this embodiment, the oil collecting member 65 is provided. The oil collecting member 65 is configured to feed the oil to the portions to be lubricated other than the meshing portions by the scooping oil feeding. The oil collecting member 65 will be described.

The oil collecting member 65 is particularly provided in an upper part in the transmission housing 3. More specifically, the oil collecting member 65 is disposed obliquely upward of the input shaft 10 when seen in the axial direction. The oil collecting member 65 collects the oil scooped from the oil reservoir 5a by the driven gear for second speed 22. The oil collecting member 65 includes a bottom surface 65a extending axially of the input shaft 10 and left and right side surfaces 65b extending upward from left and right ends of the bottom surface 65a, and has a trough shape with an open top side.

The oil collecting member 65 is configured to feed the oil introduced into the oil collecting member 65 to the portions to be lubricated in the transmission case 5, for example, bearings 41 to 46, mating surfaces between the input shaft 10 and the drive gears 11 to 16, mating surfaces between the counter shaft 30 and the driven gears 21 to 25, and meshing portions between the drive gears 11 to 16 and the driven gears 21 to 26.

A top surface of the transmission housing 3 above the oil collecting member 65 has a rib 3b extending downward toward the oil collecting member 65. As described later, the rib 3b particularly guides the oil dispersed from the drive gear for second speed 12 and a flange-like member 60 described later and adhering to the top surface and the rib 3b so as to fall into the oil collecting member 65. The rib 3b also guides the oil discharged from the second discharge portion 82e of the guide portion for second speed 82 and adhering to the top surface and the rib 3b so as to fall into the oil collecting member 65.

The second discharge portion 82e of the guide portion for second speed 82 is configured to discharge the oil from the second discharge portion 82e so that the oil discharged from the second discharge portion 82e is collected by the oil collecting member 65 when a rotational speed of the driven gear for second speed 22 is higher than a predetermined speed. Specifically, when the rotational speed of the driven gear for second speed 22 is higher than the predetermined speed, the second discharge portion 82e discharges the oil at such a discharge speed that the oil discharged from the second discharge portion 82e reaches the top side of the oil collecting member 65. The oil discharged from the second discharge portion 82e enters the oil collecting member 65 directly or via the rib 3b from the top surface above the oil collecting member 65.

A front end of the first discharge portion 82d is particularly located near the meshing portion 62, and thus the first discharge portion 82d feeds the oil to the meshing portion 62 irrespective of the rotational speed of the driven gear for second speed 22.

On the other hand, a front end (upper end) of the second discharge portion 82e is located away from the oil collecting member 65, and when the rotational speed of the driven gear for second speed 22 is lower than the predetermined speed, it is difficult for the oil collecting member 65 to collect the oil discharged from the second discharge portion 82e.

Then, in this embodiment, even when the rotational speed of the driven gear for second speed 22 is lower than the predetermined speed, the oil fed via the meshing portion 62 to the drive gear for second speed 12 is fed to the oil collecting member 65.

Specifically, the flange-like member 60 having a larger outer diameter than an outer diameter of the tooth trace 12a (diameter of tooth top circle) is provided adjacent to a retarding side in the rotational direction of the tooth trace 12a (that is, the side opposite to the driving source) in the axial direction of the drive gear for second speed 12. The flange-like member 60 is provided to rotate integrally with the drive gear for second speed 12.

The flange-like member 60 particularly has a disk shape with a predetermined thickness in the axial direction of the drive gear for second speed 12. A side surface 60a of the flange-like member 60 on the side of the drive gear for second speed 12 is planar in a direction substantially perpendicular to the axial direction of the drive gear for second speed 12.

A coupling portion 60b coupled with the drive gear for second speed 12 is particularly provided on an inner peripheral side of the side surface 60a of the flange-like member 60. The flange-like member 60 may be formed integrally with the drive gear for second speed 12, or may be formed separately from the drive gear for second speed 12 and then coupled integrally with the drive gear for second speed 12 by press fitting or the like.

The oil fed from the first discharge portion 82d of the guide portion for second speed 82 to the meshing portion 62 adheres to the tooth trace 12a located in the lower part of the drive gear for second speed 12 in the meshing portion 62. Thus, the oil fed from the first discharge portion 82d to the meshing portion 62 is fed via the meshing portion 62 to the drive gear for second speed 12. The oil fed to the drive gear for second speed 12 flows along the surface of the tooth trace 12a toward the flange-like member 60 with the rotation of the drive gear for second speed 12 due to the twist of the tooth trace 12a. Specifically, the oil fed to the drive gear for second speed 12 (oil adhering to the tooth trace 12a) moves upward while moving toward the side opposite to the driving source of the tooth trace 12a (toward the flange-like member 60).

In this embodiment, the first discharge portion 82d is particularly disposed closer to the flange-like member 60 than the second discharge portion 82e in the axial direction of the driven gear for second speed 22. Thus, the oil discharged from the first discharge portion 82d is fed in a larger amount to a part of the meshing portion 62 closer to the flange-like member 60, thereby increasing the amount of oil adhering to the flange-like member 60.

The oil having moved upward while moving toward the side opposite to the driving source of the tooth trace 12a of the drive gear for second speed 12 adheres to the side surface 60a of the flange-like member 60. As shown in FIG. 6, the oil adhering to the side surface 60a is dispersed radially outward of the flange-like member 60 from the peripheral edge 60c of the flange-like member 60 by rotation of the flange-like member 60 that rotates with the drive gear for second speed 12 in the R1 direction, and the oil dispersed from the flange-like member 60 is collected by the oil collecting member 65. The oil dispersed from the flange-like member 60 enters the oil collecting member 65 directly or via the rib 3b from the top surface above the oil collecting member 65. The oil thus collected by the oil collecting member 65 is fed to the portions to be lubricated other than the meshing portion 62 in the transmission case 5.

The flange-like member 60 particularly has the larger outer diameter than the outer diameter of the tooth trace 12a, thereby increasing a centrifugal force acting on the oil. This can ensure the amount of oil collected by the oil collecting member 65 even if the driven gear for second speed 22 rotates at low speed such as the predetermined speed or lower and thus the drive gear for second speed 12 rotates at low speed.

As shown in FIG. 6, the input shaft 10 rotates in the R1 direction, and the drive gear for second speed 12 secured on the input shaft 10 also rotates in the R1 direction. The driven gear for second speed 22 always meshing with the drive gear for second speed 12 rotates in the R2 direction. The oil collecting member 65 is disposed at substantially the same height as the uppermost part of the drive gear for second speed 12 (height higher than the driven gear for second speed 22) and on a lateral side of the uppermost part on an advancing side (left side in FIG. 6) in the rotational direction (R1 direction) of the drive gear for second speed 12, in the upper part in the transmission case 5.

The oil scooped by the driven gear for second speed 22 is discharged from the first discharge portion 82d of the guide portion for second speed 82 toward the meshing portion 62 of the gear train for second speed G2, and also discharged from the second discharge portion 82e of the guide portion for second speed 82 toward the oil collecting member 65 above the input shaft 10. Thus, the oil scooped by the driven gear for second speed 22 can be used to both feed the oil to the meshing portion 62 of the gear train for second speed G2 and feed the oil via the oil collecting member 65 to the portions to be lubricated.

The oil can be fed from the first discharge portion 82d to the meshing portion 62 irrespective of the rotational speed of the driven gear for second speed 22. This allows the meshing portion 62 as one of the portions to be lubricated to be reliably lubricated even if the amount of oil in the oil reservoir 5a is reduced.

When the rotational speed of the driven gear for second speed 22 is higher than the predetermined speed, a sufficient amount of oil is required to be fed to the portions to be lubricated. At this time, the sufficient amount of oil is fed from the first discharge portion 82d to the meshing portion 62 as described above, and also the oil discharged from the second discharge portion 82e is collected by the oil collecting member 65. Thus, the oil collected by the oil collecting member 65 can be fed to the portions to be lubricated other than the meshing portion 62.

Thus, even if the amount of oil in the oil reservoir 5a is reduced, the sufficient amount of oil can be fed to the portions to be lubricated including the meshing portion 62 during high speed rotation of the driven gear for second speed 22. With such a simple configuration including the guide portion for second speed 82 provided around the driven gear for second speed 22 on the advancing side in the rotational direction, the amount of oil in the oil reservoir 5a (amount of oil in which the gear is immersed) can be reduced, and the amount of oil to be fed to the portions to be lubricated including the meshing portion 62 can be ensured particularly during high speed rotation of the driven gear for second speed 22.

When the rotational speed of the driven gear for second speed 22 is the predetermined speed or lower, the oil collecting member 65 is disposed at the higher height than the driven gear for second speed 22, and it is difficult for the oil collecting member 65 to collect the oil discharged from the second discharge portion 82e. However, during the low speed rotation of the driven gear for second speed 22, there is no serious problem in the reduction in the amount of oil to be fed to the portions to be lubricated other than the meshing portion 62. Also, the oil fed to a different gear via the meshing portion 62 can be dispersed radially outward from the different gear by rotation of the different gear, and the dispersed oil can be collected by the oil collecting member 65. This allows as large an amount of oil as possible to be fed to the portions to be lubricated other than the meshing portion 62 even during the low speed rotation of the driven gear for second speed.

As described above, the baffle plate 80 is configured to facilitate satisfactory lubrication in the transmission case 5 in the parallel state of the oil level OL1, for example, in a vehicle stopping state on a flat road and an inertial traveling state.

As shown by the imaginary line OL2 in FIG. 1, for example, during ascending and/or accelerating, the oil retained in the oil reservoir 5a in the transmission case 5 flows to the side opposite to the driving source (vehicle rear side) in the transmission case 5, and the oil level OL2 may be inclined rearward and upward to the road surface, the vehicle horizontal direction, and the transmission case 5 when seen in the vehicle width direction so that the oil in the oil reservoir 5a is shallower on the driving source side than on the side opposite to the driving source in the transmission case 5 (hereinafter referred to as "predetermined inclined state").

In the predetermined inclined state, the amount of oil retained in the oil reservoir 5a is reduced as described above, and thus the oil level OL2 tends to be low on the vehicle front side in the oil reservoir 5a. Thus, if no measures are taken, the driven gear for first speed 21 disposed on the vehicle front side (driving source side) is unlikely to be immersed in the oil below the oil level OL2 in the predetermined inclined state. In this case, the driven gear for first speed 21 sometimes cannot sufficiently scoop the oil to cause a shortage of the oil to be fed to the portions to be lubricated in the transmission case 5.

In this respect, the baffle plate 80 in this embodiment includes, in addition to the configuration for lubricating the transmission 1 in the parallel state of the oil level OL1 (the vehicle stopping state on a flat road and the inertial traveling state) described above, a structure for lubricating the transmission 1 in the predetermined inclined state of the oil level OL2 of the oil retained in the transmission case 5 (for example, during ascending and/or accelerating).

A configuration relating to a lubrication facilitating function of the baffle plate 80 will be described below in the predetermined inclined state of the oil level of the oil retained in the transmission case 5.

As shown in FIGS. 2 to 4, the baffle plate 80 particularly includes, in addition to a body including the guide portion for first speed 81 and the guide portion for second speed 82, a guide portion for third speed 83 as an extending portion continuous with the side opposite to the driving source of the body, a trough 84 extending from an upper end of the guide portion for third speed 83 toward the driving source side in the axial direction to the guide portion for first speed 81, and an oil receiver 85 disposed above an area of the trough 84 on the side opposite to the driving source.

As shown in FIGS. 2 to 4 and 7, the guide portion for third speed 83 particularly includes an outer peripheral surface 83a provided around an outer peripheral surface of the driven gear for third speed 23, and an extending portion 83c as a first vertical wall extending radially inward from an edge 83b of the outer peripheral surface 83a on the side opposite to the driving source.

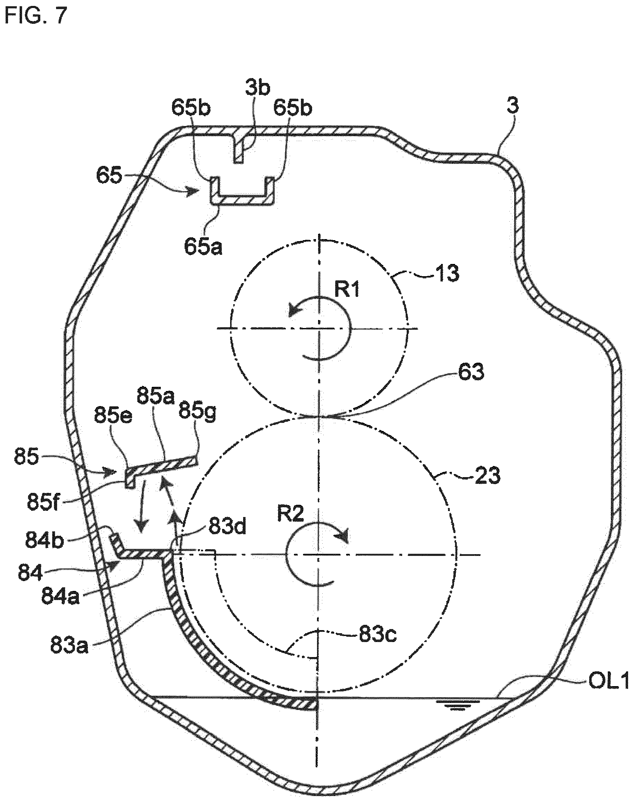

As shown in FIG. 7, the outer peripheral surface 83a of the guide portion for third speed 83 is particularly disposed to face the outer peripheral surface of the driven gear for third speed 23 with a certain gap therebetween, and has a substantially quadrant shape when seen in the axial direction so as to extend circumferentially around the outer peripheral surface of the driven gear for third speed 23. An upper end of the outer peripheral surface 83a is disposed near a lateral side of a middle part in the up-down direction of the driven gear for third speed 23, and a lower end of the outer peripheral surface 83a is disposed near a lower side of a lower end of the driven gear for third speed 23. An axial width of the outer peripheral surface 83a is larger than a width of the driven gear for third speed 23 from bottom to top of the outer peripheral surface 83a. The edge 83b of the outer peripheral surface 83a on the side opposite to the driving source is disposed offset from the driven gear for third speed 23 toward the side opposite to the driving source in the axial direction. The axial width of the outer peripheral surface 83a is substantially constant over the entire circumferential length.

As shown in FIG. 4, the upper edge 83d of the outer peripheral surface 83a particularly has a predetermined inclination to the axial direction so that the driving source side is lower than the side opposite to the driving source.

As shown in FIGS. 2 and 7, the extending portion 83c of the guide portion for third speed 83 is particularly disposed to face a surface of the driven gear for third speed 23 on the side opposite to the driving source with a predetermined gap. The extending portion 83c is particularly formed to cover an outer edge of the surface of the driven gear for third speed 23 on the side opposite to the driving source from bottom to top. A radial dimension of the extending portion 83c is at least larger than a tooth depth of the driven gear for third speed 23. The extending portion 83c can receive the oil dispersed slightly closer to the side opposite to the driving source than an axial scooping position due to the inclination of the tooth trace 23a of the driven gear for third speed 23 of the gear train for third speed G3, which is formed by the helical gear as described above. This can increase the amount of oil held between the outer periphery of the driven gear for third speed 23 and the guide portion for third speed 83.

As described above, the driven gear for third speed 23 can be immersed in the oil in the predetermined inclined state where the oil level (see the imaginary line OL2 in FIG. 1) in the oil reservoir 5a is inclined to the road surface (for example, during ascending and/or acceleration traveling). At this time, the oil scooped by the driven gear for third speed 23 flows upward from the oil reservoir 5a through the gap between the outer periphery of the driven gear for third speed 23 and the outer peripheral surface 83a of the guide portion for third speed 83. This ensures the amount of oil to be fed to the meshing portion 63 between the driven gear for third speed 23 and the drive gear for third speed 13. The gap is set to such a value that as large an amount of oil as possible flows through the gap with little influence on rotation resistance of the driven gear for third speed 23.

The trough 84 particularly includes a bottom 84a radially outward projecting from the outer peripheral surface 83a of the guide portion for third speed 83, the outer peripheral surface 82a of the guide portion for second speed 82, and the connecting surface 86, and a side wall 84b rising from a radially outer end of the bottom 84a. The trough 84 is provided to extend substantially axially. The trough 84 extends along a radially outer side of the guide portion for second speed 82 and the connecting surface 86 and connects between the guide portion for third speed 83 and the guide portion for first speed 81.

The trough 84 is particularly inclined to the axial direction and/or the road surface (vehicle horizontal direction). More specifically, the trough 84 is inclined obliquely downward toward the driving source side so as to be gradually lower in position from the side of the guide portion for third speed 83 toward the side of the guide portion for first speed 81. The upper edge 83d of the guide portion for third speed 83 is inclined along the inclination of the trough 84.

In the vehicle front-rear direction, a rear end (end opposite to the driving source side) 84c of the trough 84 extends to substantially the same position as the extending portion 83c of the guide portion for third speed 83. At the rear end 84c of the trough 84, a radially inner edge of the bottom 84a is connected to the upper edge 83d of the guide portion for third speed 83. A front end (end on the driving source side) 84d of the trough 84 is connected to the extending portion 81c of the guide portion for first speed 81 at a lower height than the rear end 84c, more specifically, for example, at substantially the same height as the lower end of the guide portion for third speed 83.

The edge 84e of the bottom 84a of the trough 84 on the side opposite to the side wall 84b is particularly connected to the outer peripheral surface 82a of the guide portion for second speed 82 and a surface of the connecting surface 86 opposite to the gear.

The inclination of the trough 84 is particularly set so that the bottom 84a is higher on the side of the guide portion for third speed 83 than on the side of the guide portion for first speed 81 even if the oil level in the transmission case 5 is inclined rearward and upward to the road surface, for example, as during ascending. More specifically, the inclination of the trough 84 is set to be equal to or larger than a maximum inclination angle of a road surface that the vehicle can ascend, and preferably an inclination angle slightly larger (for example, about 2 to 4 degrees) than the maximum inclination angle.

The extending portion 81c of the guide portion for first speed 81 particularly has an opening 81d in a position corresponding to the front end 84d of the trough 84. More specifically, the opening 81d is disposed at a height higher than the bottom 84a of the trough 84 at the front end 84d and in a position overlapping the side wall 84b in the vehicle up-down direction. Thus, the front end 84d of the trough 84 communicates with an inner space of the guide portion for first speed 81 through the opening 81d.

The oil receiver 85 particularly includes a hood 85a disposed to face the upper edge 83d of the guide portion for third speed 83 from above, and a vertical wall 85c as a second vertical wall extending downward from the end 85b of the hood 85a on the side opposite to the driving source to the upper end of the extending portion 83c of the guide portion for third speed 83.

The hood 85a is particularly disposed in a position overlapping the upper edge 83d of the guide portion for third speed 83 in the vehicle width direction, and is inclined to be parallel to the upper edge 83d when seen in the vehicle width direction so that the driving source side is lower than the side opposite to the driving source. The end 85d of the hood 85a on the driving source side extends to the guide portion for second speed 82, and is connected to the first discharge portion 82d, the second discharge portion 82e, and the extending portion 82c of the guide portion for second speed 82.

The hood 85a particularly includes a downward extending portion 85f extending downward from an outer end 85e on a radially outer side of the hood 85a (side opposite to the driven gear for third speed 23). In the vehicle width direction, the outer end 85e and the downward extending portion 85f are disposed outside the upper edge 83d of the outer peripheral surface 83a of the guide portion for third speed 83. Specifically, the hood 85a has a length enough to reliably receive the oil scooped by the driven gear for third speed 23 and dispersed radially outward in the vehicle width direction.

The outer end 85e and the downward extending portion 85f of the hood 85a are particularly disposed in a position overlapping the bottom 84a of the trough 84 in the vehicle width direction, that is, on the inner side (gear side) of the side wall 84b of the trough 84 in the vehicle width direction. Specifically, the downward extending portion 85f of the hood 85a extends downward toward the bottom 84a of the trough 84. Thus, the oil received by the hood 85a falls and is fed along the downward extending portion 85f to the trough 84.

An inner end 85g on the radially inner side (side of the driven gear for third speed 23) of the hood 85a is particularly disposed near a tooth surface of the driven gear for third speed 23. This allows the hood 85a to receive the oil held on the tooth surface of the driven gear for third speed 23 and raised from the oil reservoir 5a.

The hood 85a is particularly inclined so that the outer end 85e is lower than the inner end 85g when seen in the axial direction. Thus, the oil received by the hood 85a can be guided to flow along a lower surface of the hood 85a from the inner end 85g toward the outer end 85e. This facilitates falling and feeding of the oil from the outer end 85e of the hood 85a via the downward extending portion 85f to the trough 84.

The vertical wall 85c of the oil receiver 85 is particularly connected, at an upper edge 85h, to the end 85b of the hood 85a on the side opposite to the driving source, and connected, at a lower edge 85i, to the extending portion 83c of the guide portion for third speed 83 and the rear end 84c of the trough 84. As shown in FIG. 2, the vertical wall 85c is inclined to the vehicle up-down direction (direction perpendicular to the road surface). More specifically, the vertical wall 85c is inclined so that the upper edge 85h is located on the driving source side (vehicle front side) of the lower edge 85i in the axial direction.

The inclination of the vertical wall 85c is particularly set so that the upper edge 85h is always located on the driving source side of the lower edge 85i in the axial direction even in the predetermined inclined state (see the imaginary line OL2 in FIG. 1) such as during ascending. The vertical wall 85c has substantially the same width as the hood 85a in the vehicle width direction.

Next, a lubricating operation for the transmission 1 in the predetermined inclined state (see the imaginary line OL2 in FIG. 1) such as during ascending will be described.

In the predetermined inclined state as shown by the imaginary line OL2 in FIG. 1 (see the imaginary line OL2 in FIG. 1), an oil depth is larger in the axial position of the driven gear for third speed 23 disposed closer to the side opposite to the driving source than in the axial position of the driven gear for first speed 21. Thus, sometimes, the driven gear for first speed 21 is not immersed in the oil and the driven gear for third speed 23 is immersed in the oil.

In this case, the oil in the oil reservoir 5a is scooped by the driven gear for third speed 23 in the immersed state. At this time, the oil flows upward from the oil reservoir 5a through the gap between the outer periphery of the driven gear for third speed 23 and the outer peripheral surface 83a of the guide portion for third speed 83. This ensures the amount of oil to be fed to the meshing portion 63 between the driven gear for third speed 23 and the drive gear for third speed 13, thereby lubricating the meshing portion 63.

The oil scooped by the driven gear for third speed 23 formed by the helical gear tends to be dispersed offset toward the side opposite to the driving source in the axial direction. The oil dispersed from the driven gear for third speed 23 toward the side opposite to the driving source in the axial direction is received by the extending portion 83c of the guide portion for third speed 83 and held in the guide portion for third speed 83. This can increase the amount of oil to be fed upward by the driven gear for third speed 23.

The oil guided by the guide portion for third speed 83 and scooped by the driven gear for third speed 23 is dispersed circumferentially upward and toward the side opposite to the driving source in the axial direction near the upper edge 83d of the outer peripheral surface 83a of the guide portion for third speed 83.

The oil dispersed circumferentially upward from the tooth surface of the driven gear for third speed 23 is received by the hood 85a of the oil receiver 85. The oil received by the hood 85a falls and is fed from the downward extending portion 85f to the rear end 84c of the trough 84 due to the inclination (see FIG. 7) when seen in the axial direction as described above. The oil received by the hood 85a flows axially forward along the lower surface of the hood 85a due to the forward and downward inclination (see FIG. 2) when seen in the vehicle width direction, and falls and is fed to the trough 84 as described above.

On the other hand, the oil dispersed toward the side opposite to the driving source in the axial direction due to the inclination of the tooth trace 23a of the driven gear for third speed 23 is received by the vertical wall 85c of the oil receiver 85. The oil received by the vertical wall 85c flows downward along the vertical wall 85c and is fed to the front end 84d of the trough 84. The oil flows along the vertical wall 85c obliquely upward toward the hood 85a and is fed via the hood 85a to the trough 84 due to the inclination of the vertical wall 85c (see FIG. 2).

As described above, the oil guided by the trough 84 flows forward along the trough 84 due to the forward and downward inclination of the trough 84. The oil thus having flowed through the trough 84 from the side of the guide portion for third speed 83 toward the side of the guide portion for first speed 81 is fed from the front end 84d of the trough 84 through the opening 81d in the guide portion for first speed 81 to the outer periphery of the driven gear for first speed 21 covered with the guide portion for first speed 81.

From the above, even in the predetermined inclined state (see the imaginary line OL2 in FIG. 1) where the driven gear for first speed 21 is not immersed in the oil, the oil scooped by the driven gear for third speed 23 located two trains behind the driven gear for first speed 21 is guided by the baffle plate 80 and fed to the driven gear for first speed 21.

Thus, even in the predetermined inclined state, the meshing portion 61 of the gear train for first speed G1 can be reliably lubricated, and part of the oil fed to the driven gear for first speed 21 is guided by the guide portion for first speed 81 to be introduced into the oil feed hole 10b in the input shaft 10. This allows the oil fed through the oil feed hole 10b to the main oil path 10a in the input shaft 10 to lubricate each portion. This allows satisfactory lubrication during ascending and/or accelerating when a large driving force is required.

Even in the predetermined inclined state, satisfactory lubrication can be achieved without increasing the amount of oil retained to the extent that the driven gear for first speed 21 is always immersed in the oil, thereby reducing the amount of oil retained. Thus, for example, the oil level can be reduced to the extent that the driven gear for first speed 21 is brought into a non-immersed state in the predetermined inclined state, and the oil level can be reduced to the extent that the driven gear for third speed 23 is brought into a non-immersed state in a non-inclined state where the oil level (see the imaginary line OL2 in FIG. 1) is parallel to the road surface.

This can effectively reduce agitation resistance when the oil is scooped by the driven gears 21 to 26 on the counter shaft 30 and the oil weight. In particular, during ascending and/or accelerating, the driven gear for first speed 21 having the largest diameter on the counter shaft 30 is likely to be brought into the non-immersed state, thereby reducing agitation resistance of the driven gear for first speed 21.

Further, the oil feed path from the driven gear for third speed 23 to the driven gear for first speed 21 can be formed to be short and simple in the baffle plate 80 disposed adjacent to the lateral sides of the gears 21, 23. Also, as described above, satisfactory lubrication can be achieved without the driven gear for first speed 21 being always immersed in the oil, and thus there is no need to provide, in the transmission case 5, a partition wall or that like for defining the oil reservoir 5a so that the driven gear for first speed 21 is likely to be immersed in the oil. Thus, satisfactory lubrication can be achieved with a generally simple configuration.

Also, satisfactory lubrication is achieved using the baffle plate 80, and a gear arrangement can be adopted such that the driven gear for first speed 21 having the maximum diameter is disposed near the front end of the transmission case 5 where the gear is unlikely to be immersed in the oil in the predetermined inclined state.

Among the driven gears for first, second, and third speeds 21, 22, 23 covered with the baffle plate 80, the driven gear for second speed 22 located in the middle can be immersed in the oil in both the predetermined inclined state and the non-inclined state, and thus the driven gear for second speed 22 can always scoop the oil. The oil scooped by the driven gear for second speed 22 is fed to the meshing portion 62 of the gear train for second speed G2 by the guide portion for second speed 82 of the baffle plate 80 or to various portions via the oil collecting member 65 as described above. This can always achieve satisfactory lubrication by the scooping oil feeding with the driven gear for second speed 22.

As described above, this embodiment has been described taking an output reduction type manual transmission as an example in which the rotation of the input shaft 10 is decelerated and transmitted to the counter shaft 30 by the transmission gear trains GR, G1, G2, G3, G4, G5 provided between the input shaft 10 and the counter shaft 30, and the rotation transmitted to the counter shaft 30 is decelerated at a certain reduction gear ratio and transmitted to the output shaft 20 by the gear train for deceleration GN. However, an input reduction type manual transmission may be adopted.

In this embodiment, the oil discharged from the first discharge portion 82d has been described to be fed toward the meshing portion 62. However, the oil may be fed toward the flange-like member 60 provided on the lateral side of the drive gear for second speed 12 or both the meshing portion 62 and the flange-like member 60.

The present invention is not limited to the illustrated example, but various improvements and design changes may be made without departing from the gist of the present invention.

In addition to the configuration in this embodiment, the transmission case 5 may include a configuration for increasing the oil level in the predetermined inclined state.

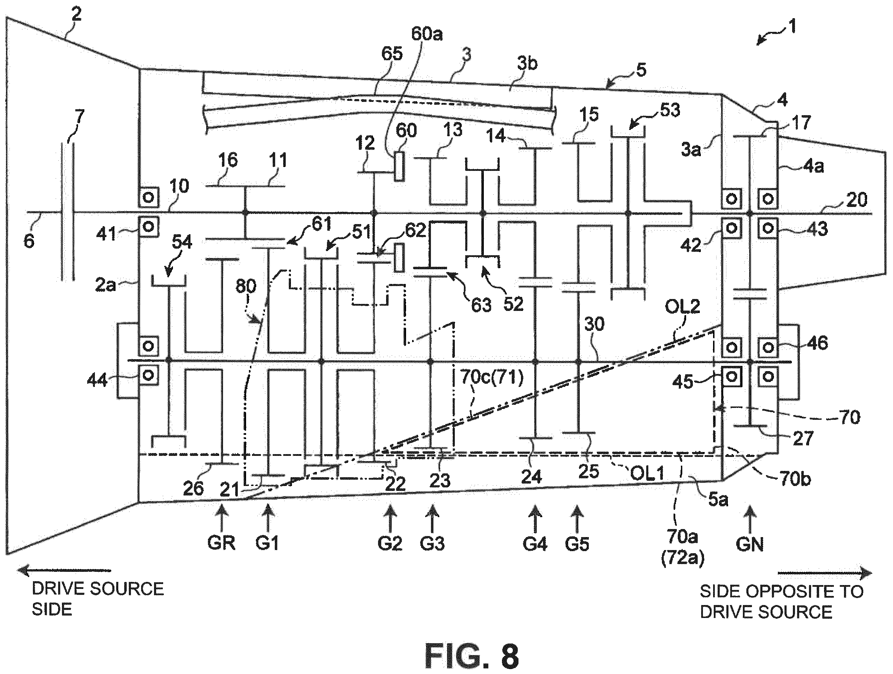

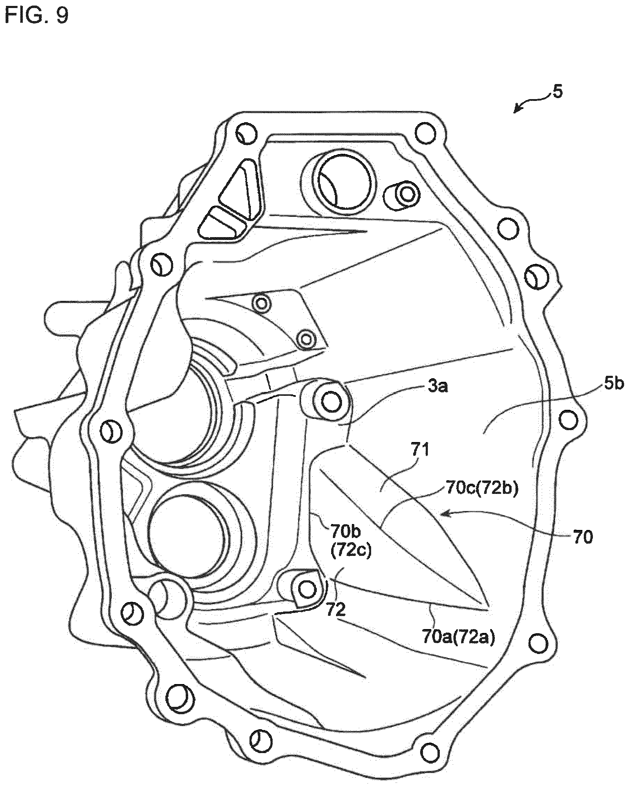

Particularly, As shown in FIGS. 8 and 9, the transmission case 5 includes a reduced volume portion 70 formed so that one side wall 5b in the vehicle width direction on the peripheral wall of the transmission housing 3 protrudes to expand inward. This reduces an internal volume of the transmission case 5 as compared to a case without the reduced volume portion 70.

The reduced volume portion 70 is tapered toward the vehicle front side and has a substantially triangular shape in a side view. The reduced volume portion 70 is provided over an intermediate part and a rear part of the transmission case 5 in the vehicle front-rear direction.

The reduced volume portion 70 has a substantially right triangular shape with a substantially right-angled lower rear corner when seen in the vehicle width direction. The reduced volume portion 70 includes a base 70a extending in the vehicle front-rear direction, a vertical side 70b extending upward from a rear end of the base 70a in the vehicle up-down direction, and an oblique side 70c connecting a front end of the base 70a and an upper end of the vertical side 70b. The base 70a is disposed near a lower end of the side wall 5b of the transmission housing 3, and the vertical side 70b is provided on the vertical wall 3a of the transmission housing 3.

The reduced volume portion 70 includes an inclined surface 71 inclined forward and downward along the oblique side 70c, and a vertical surface 72 provided between the base 70a and the oblique side 70c when seen in the vehicle width direction.

The inclined surface 71 constitutes an upper edge of the reduced volume portion 70. The inclined surface 71 is provided to extend inward in the vehicle width direction from the side wall 5b of the transmission housing 3. In a front view, a front end of the inclined surface 71 is tapered toward its tip.

The vertical surface 72 has a right triangular shape when seen in the vehicle width direction. The vertical surface 72 is provided to extend upward of a vehicle body from the side wall 5b of the transmission housing 3. A lower edge 72a of the vertical surface 72 is disposed to extend in the vehicle front-rear direction along the base 70a when seen in the vehicle width direction. An upper edge 72b of the vertical surface 72 is disposed along the oblique side 70c when seen in the vehicle width direction, and continuous with an inner edge of the inclined surface 71 in the vehicle width direction. A rear edge 72c of the vertical surface 72 is disposed along the vertical side 70b when seen in the vehicle width direction.

As shown in FIG. 8, the inclined surface 71 as the upper edge of the reduced volume portion 70 is provided along the oil level OL2 in the predetermined inclined state when seen in the vehicle width direction. More specifically, in a state where the oil level OL2 is inclined to the road surface at an angle substantially equal to an ascending limit angle (a maximum inclination angle of a road surface that the vehicle can ascend) or an angle slightly larger (for example, about 2 to 4 degrees) than the ascending limit angle, the inclined surface 71 is disposed along the oblique side 70c when seen in the vehicle width direction.

In the predetermined inclined state where all the oil in the transmission case 5 is retained in the oil reservoir 5a, the inclined surface 71 is preferably disposed slightly below the oil level OL2, and thus the entire reduced volume portion 70 is immersed in the oil in the predetermined inclined state.

On the other hand, the lower edge 72a of the vertical surface 72 as the lower edge of the reduced volume portion 70 is provided along the oil level OL1 in the parallel state when seen in the vehicle width direction. More specifically, in the parallel state where all the oil in the transmission case 5 is retained in the oil reservoir 5a, the lower edge 72a of the vertical surface 72 is disposed above the oil level OL1 with a slight space. This prevents the reduced volume portion 70 from being immersed in the oil in the parallel state, thereby reducing the oil level OL1 in the parallel state.

In the transmission case 5, the reduced volume portion 70 is provided in an area in the vehicle front-rear direction where the oil depth in the predetermined inclined state (see the oil level OL2 in FIG. 1) is larger than that in the parallel state (see the oil level OL1 in FIG. 1) and an area in the vehicle up-down direction higher than the oil level OL1 in the parallel state. Thus, the reduced volume portion 70 is not immersed in the oil in the parallel state, and immersed in the oil in the predetermined inclined state.

The lower edge 72a (base 70a) of the reduced volume portion 70 is provided in a position higher than the lower end of the driven gear for second speed 22 and lower than the lower end of the driven gear for third speed 23 in the up-down direction. An upper end (rear end) of the upper edge 72b of the reduced volume portion 70 is provided in the intermediate part of the transmission case 5 in the up-down direction, for example, at a height between the input shaft 10 and the counter shaft 30.

The configuration described above can reduce the amount of oil retained, and also increase the oil level OL2 to the extent that the driven gears for second and third speeds 22, 23 can be immersed in the oil in the predetermined inclined state. Thus, in the predetermined inclined state, the oil scooped by the driven gear for third speed 23 can be reliably fed via the baffle plate 80, the driven gear for first speed 21, and the main oil path 10a in the input shaft 10 to the portion to be lubricated, and also the oil scooped by the driven gear for second speed 22 can be reliably fed via the oil collecting member 65 to the portion to be lubricated.

On the other hand, in the parallel state, the reduced volume portion 70 is not immersed in the oil, thereby effectively reducing the oil level OL1. A state where the driven gears for third, fourth, and fifth speeds 23 to 25 are not immersed in the oil can be easily brought, thereby effectively reducing agitation resistance.

As described above, the present invention can provide a lubricating structure for a transmission, which is a longitudinally mounted manual transmission, the lubricating structure being simple and ensuring an amount of oil to be fed to a portion to be lubricated in a transmission case and also allowing a reduction in amount of oil retained. Thus, the present invention can be favorably applied to a technical field of manufacturing transmissions and vehicles including the transmissions.

### REFERENCE SIGNS LIST

- 1: transmission
- 5: transmission case
- 10: input shaft (first shaft)
- 10A: cylindrical portion
- 10a: main oil path (oil passage)
- 10b: oil feed hole
- 21: driven gear for first speed (second gear)
- 22: driven gear for second speed (third gear)
- 23: driven gear for third speed (first gear)
- 30: counter shaft (second shaft)
- 62: meshing portion
- 65: oil collecting member
- 80: baffle plate (oil feeder)
- 81: guide portion for first speed (second guide portion)
- 81d: opening
- 81e: upper end (oil discharge portion)
- 82: guide portion for second speed (third guide portion)
- 82d: first discharge portion
- 82e: second discharge portion
- 83: guide portion for third speed (first guide portion)
- 83c: extending portion (first vertical wall)
- 84: trough
- 85: oil receiver
- 85a: hood
- 85c: vertical wall (second vertical wall)
- G1 to G5: plurality of transmission gear trains
- G1: gear train for first speed (second gear train)
- G3: gear train for third speed (first gear train)
- OL2: oil level in predetermined inclined state

## Claims

1. A lubricating structure for a transmission (1) comprising:
a first shaft (10) disposed to extend in a vehicle front-rear direction;
a second shaft (30) disposed parallel to the first shaft (10) below the first shaft (10);
a plurality of transmission gear trains (G1 to G5) provided at axial intervals between the first shaft (10) and the second shaft (30); and
a transmission case (5) housing the first shaft (10), the second shaft (30), the plurality of gear trains (G1 to G5), and lubricating oil; and
an oil feeder (80), wherein
the plurality of transmission gear trains (G1 to G5) include a first gear train (G3) having a first gear (23) provided on the second shaft (30), and a second gear train (G1) having a second gear (21) provided on the second shaft (30), and
the oil feeder (80) is configured to catch the oil scooped by the first gear (23) and feed the oil to the second gear (21) in a predetermined inclined state where an oil level is inclined when seen in a vehicle width direction so that the oil is deeper at the first gear (23) than at the second gear (21).

2. The lubricating structure for a transmission (1) according to claim 1, wherein the oil feeder (80) is disposed adjacent to lateral sides of the first gear (23) and the second gear (21).

3. The lubricating structure for a transmission (1) according to claim 1 or 2, wherein the predetermined inclined state is a state where the oil level is inclined to a horizontal line or a road surface when seen in a vehicle width direction so that the oil is deeper on a side of the first gear (23) than on a side of the second gear (21).

4. The lubricating structure for a transmission (1) according to any one of the preceding claims, wherein a diameter of the first gear (23) is smaller than a diameter of the second gear (21).

5. The lubricating structure for a transmission (1) according to any one of the preceding claims, wherein the first gear (23) is disposed behind the second gear (21) in the vehicle front-rear direction.

6. The lubricating structure for a transmission (1) according to any one of the preceding claims, wherein the oil feeder (80) includes
a first guide portion (83) provided to extend circumferentially around an outer periphery of the first gear (23),
an oil receiver (85) disposed to face an upper end of the first guide portion (83) and configured to receive the oil scooped by the first gear (23), and
a trough (84) disposed to extend from a lower part of the oil receiver (85) to the second gear (21) and configured to feed the oil received by the oil receiver (85) to the second gear (21).

7. The lubricating structure for a transmission (1) according to claim 6, wherein the first gear (23) is formed by a helical gear, and
the first guide portion (83) includes a first vertical wall (83c) axially facing the first gear (23) from a side on which the oil is dispersed due to an inclination of a tooth trace of the first gear (23).

8. The lubricating structure for a transmission (1) according to claim 6 or 7, wherein the oil receiver (85) includes a hood (85a) disposed to face an upper end of the first guide portion (83) from above and configured to receive the oil dispersed circumferentially upward from a tooth surface of the first gear (23), and a second vertical wall (85c) that extends downward from the hood (85a) and receives the oil dispersed axially due to the inclination of the tooth trace of the first gear (23).

9. The lubricating structure for a transmission (1) according to any one of claims 6 to 8, wherein the oil feeder (80) includes a second guide portion (81) extending circumferentially around an outer periphery of the second gear (21), and
the second guide portion (81) includes an opening (81d) for feeding, to a tooth surface of the second gear (21), the oil flowing through the trough (84) toward the second gear (21).

10. The lubricating structure for a transmission (1) according to claim 9, wherein the first shaft (10) includes a cylindrical portion (10A) having therein an oil passage (10a) extending axially, and an oil feed hole (10b) extending through a peripheral wall of the cylindrical portion (10A) to introduce the oil from an outer periphery of the cylindrical portion (10A) into the oil passage (10a), and
an upper end of the second guide portion (81) includes an oil discharge portion (81e) configured to discharge the oil toward the oil feed hole (10b).

11. The lubricating structure for a transmission (1) according to claim 9 or 10, wherein the plurality of transmission gear trains (G1 to G5) further include a third gear train (G2) having a third gear (22) provided between the first gear (23) and the second gear (21) on the second shaft (30),
the oil feeder (80) includes a third guide portion (82) extending circumferentially around an outer periphery of the third gear (22) between the first guide portion (83) and the second guide portion (81), and
the trough (84) extends axially on a radially outer side of the third guide portion (82) so as to connect the first guide portion (83) and the second guide portion (81) .

12. The lubricating structure for a transmission (1) according to claim 11, wherein at an upper end of the third guide portion (82), a first discharge portion (82d) configured to discharge the oil scooped by the third gear (22) toward a meshing portion (61) of the third gear train (G2) or a flange-like member (60) provided on a lateral side of the third gear (22), and a second discharge portion (82e) configured to discharge the oil scooped by the third gear (22) toward an oil collecting member (65) disposed above the first shaft (10) are provided axially side by side.

13. A transmission (1) comprising the lubricating structure according to any one of the preceding claims.

14. A vehicle comprising the transmission (1) according to claim 13.

15. The vehicle according to claim 14, wherein the transmission (1) is a longitudinally mounted transmission.
